# FASCICULE DE BREVET EUROPEEN

(11) **EP 0 731 374 B1**
(45) Date de publication et mention de la délivrance du brevet: **14.04.2010**
(21) Numéro de dépôt: 96400396.6
(22) Date de dépôt: 26.02.1996
(51) Int. Cl.: G02F 1/1343, G02F 1/1337

(54) **Ecran à cristaux liquides à angle de vue amélioré**
Flüssigkristallanzeige mit verbessertem Sichtwinkel
Liquid crystal display with improved viewing angle

(30) Priorité: 09.03.1995 FR 9502776
(43) Date de publication de la demande: 11.09.1996
(73) Titulaire: THOMSON multimedia, 92648 Boulogne Cédex (FR)
(72) Inventeur: Mulatier, Laurence, 92050 Paris La Défense Cedex (FR); Haas, Gunther, 92050 Paris La Défense Cedex (FR); Mourey, Bruno, 92050 Paris La Défense Cedex (FR)
(74) Mandataire: Ruellan-Lemonnier, Brigitte

(56) Documents cités:
- EP-A- 0 445 777
- EP-A- 0 636 917
- US-A- 5 309 264
- SID INTERNATIONAL SYMPOSIUM - DIGEST OF TECHNICAL PAPERS, SEATTLE, MAY 16 - 21, 1993, vol. 24 PART 1, 16 Mai 1993, SOCIETY FOR INFORMATION DISPLAY, pages 269-272, XP000508249 LIEN A ET AL: "Two-Domain TN-LCDs Fabricated by Parallel Fringe Field Method"
- SID INTERNATIONAL SYMPOSIUM - DIGEST OF TECHNICAL PAPERS, S.JOSE, JUNE 14 - 16, 1994, vol. 25, 14 Juin 1994, SOCIETY FOR INFORMATION DISPLAY, pages 594-596, XP000462734 LIEN A ET AL: "TFT-Addressed Two-Domain TN VGA Displays Fabricated Using the Parallel Fringe Field Method"
- SID INTERNATIONAL SYMPOSIUM DIGEST OF PAPERS, BOSTON, MAY 17 - 22, 1992, vol. 23, 17 Mai 1992, SOCIETY FOR INFORMATION DISPLAY, pages 798-801, XP000479122 KOIKE Y ET AL: "A Full-Color TFT-LCD with a Domain Divided Twisted Nematic Structure"

## Description

La présente invention concerne une structure particulière de cellule électrooptique (ou pixel) d'écrans à cristaux liquides permettant une amélioration de la caractéristique angulaire par rapport aux écrans à cristaux liquides connus.

Les écrans à cristaux liquides à vision directe ou à projection sont en général composés de lignes (lignes de sélection) et colonnes (lignes de données) aux intersections desquelles sont situées les électrodes de pixels connectées au travers de transistors à ces lignes. Les grilles de ces transistors forment les lignes de sélection et sont commandées par des circuits de commande périphériques qui balayent les lignes et rendent passants les transistors de chaque ligne en permettant, par les lignes de données connectées aux autres circuits de commande périphériques, de polariser les électrodes et modifier les propriétés optiques du cristal liquide compris entre ces électrodes et la contre-électrode (ou électrode de référence), permettant ainsi la formation d'images sur l'écran.

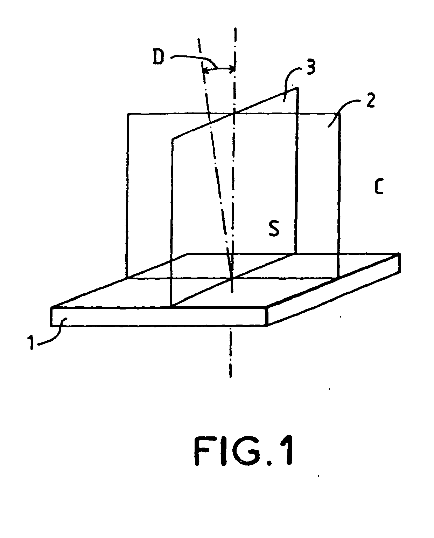

Un des inconvénients majeurs de ce type d'écran est que les propriétés optiques dépendent de la vision angulaire que l'on en a, c'est à dire qu'elles dépendent de la direction de propagation de la lumière au travers des pixels, en particulier pour les images comportant différents niveaux de gris. Sur la figure 1 est représentée une cellule à cristaux liquides nématiques twistés 1 avec deux plans de vision, le plan horizontal 2 et le plan vertical 3. Dans le cas de polariseurs croisés, une tension aux bornes des électrodes crée un champ électrique au travers du cristal liquide redressant la direction des molécules, et le pixel est dans l'état non passant, c'est à dire noir. La distribution angulaire de la transmitance de la lumière est symétrique dans le plan horizontal 2, et assymétrique dans le plan vertical 3. De ce fait, il existe une zone sombre S et une zone claire C de part et d'autre du plan horizontal. La direction de contraste maximum D, correspondant à la transmitance minimum, est située dans le plan vertical 3, son orientation dépendant de la tension appliquée entre les électrodes du pixel, c'est à dire de la luminosité. Ainsi, l'image affichée par l'écran se dégrade en fonction de l'angle de vision selon laquelle elle est perçue, cela pouvant aller jusqu'à une inversion de contraste pour de grands angles.

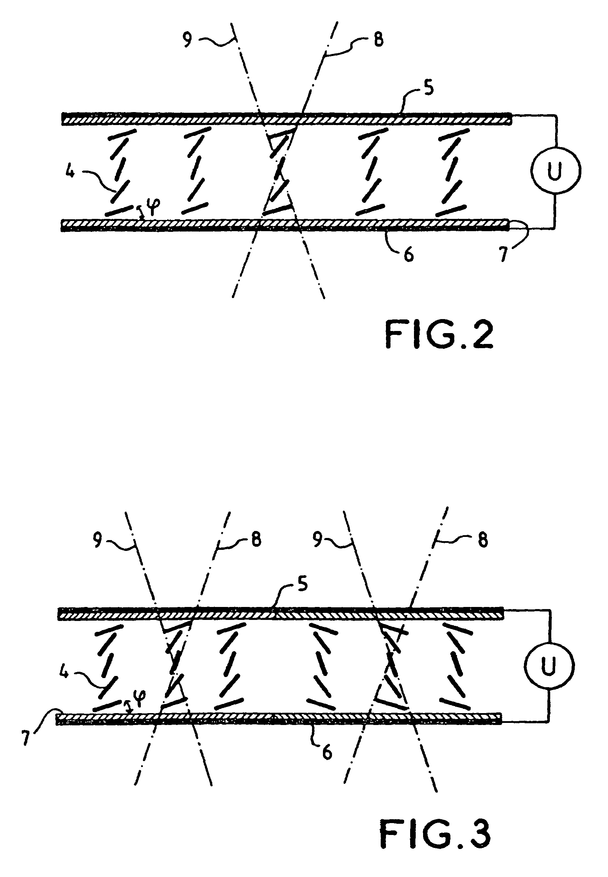

La direction des différentes zones de vision dépend de l'orientation des molécules du cristal liquide. La figure 2 représente l'alignement de ces molécules 4 dans le cas d'un cristal liquide nématique twisté en présence d'une tension U entre les électrodes 5 et 6. Ces électrodes sont recouvertes sur leurs parties faisant face au cristal liquide d'une couche d'alignement 7 (qui peut être du polyimide) imposant une direction particulière aux molécules 4 du cristal liquide. Les directions des zones sombre 8 et claire 9 évoquées plus haut sont données par l'inclinaison que prennent les molécules en présence du champ électrique. En traitant d'une certaine manière le revêtement de polyimide, on peut imposer aux molécules du cristal liquide une préinclinaison, à savoir un angle entre les molécules les plus proches du substrat et le substrat lui même en l'absence de champ électrique.

Afin de palier à ces inconvénients et obtenir une meilleure vision angulaire, un article de K.H. YANG "11th International Display Research Conference", 1991, page 68, propose une solution illustrée par la figure 3 et qui consiste à diviser chaque pixel en deux domaines ayant chacun une inclinaison opposée lorsqu'une tension U est appliquée aux électrodes. Les couches d'alignement de chacune des moitiés des pixels sont gravées de manière à créer des tilts opposés, cela peut être obtenu par deux étapes, séparées par une étape de masquage, de frottements antiparallèles de ces couches d'alignement en polyimide, ou bien de dépôt à vide d'oxyde de Silicium SiO. Dans ce cas, les effets se neutralisent et on obtient une vision symétrique quel que soit le plan de vision.

Le document US-A-5'309'264 divulgue également un écran à cristaux liquides dans lequel chaque pixel est divisé en plusieurs domaines.

Le problème de cette solution est sa réalisation technologique difficile, nécessitant une gravure de deux couches différentes d'alignement des molécules de cristal liquide, ce qui apparait extrèmement difficile à réaliser en production de masse. La présente invention permet de résoudre ces inconvénients grâce à une structure d'écran très simple à réaliser.

En effet, la présente invention concerne un écran à cristaux liquides tel que récité la revendication 1.

De préférence, cette tension est comprise entre 0,8 et 1,3 fois la valeur de la tension de polarisation de seuil du cristal liquide en présence d'un champ électrique homogène.

Une autre caractéristique de la présente invention est que ladite cellule a des couches d'alignement de molécules de cristal liquide homogènes, la division de chaque pixel en deux domaines constitués de molécules ayant des inclinaisons différentes étant uniquement provoquée par effet du champ électrique entre ladite électrode de pixel et ladite contre-électrode.

Afin d'éviter une préférence pour un des deux domaines introduit par la couche d'alignement, ladite couche d'alignement peut imposer aux molécules du cristal liquide soit, un alignement strictement parallèle à la strate, soit, en cas de présence d'une pré-inclinaison intrinsèque de ladite couche d'alignement, un alignement anti-parallèle.

Un autre perfectionnement de la présente invention consiste à augmenter légèrement l'épaisseur du cristal liquide de manière à maintenir la caractéristique optique en présence de ladite tension de polarisation lorsque le pixel n'est pas adressé. De préférence cette épaisseur est telle que son produit avec la biréfringence, divisé par la longueur d'onde de la lumière, soit légèrement supérieur à la constante √ 3 / 2, typiquement compris entre 1,1 et 1,5 fois cette constante.

Une autre caractéristique de la présente invention est qu'un matériau opaque est déposé sur l'une des plaques substrats afin de masquer la rainure de la contre électrode, ce matériau opaque pouvant être utilisé comme capacité de stockage.

D'autre part la présente invention concerne aussi un écran à cristaux liquides comportant de telles cellules électrooptiques.

La présente invention sera mieux comprise et des avantages supplémentaires apparaitront à la lecture de la description qui va suivre illustrée par les figures suivantes:
- la figure 1 déjà décrite représente un exemple de pixel constitué d'un cristal liquide nématique twisté selon l'art antérieur et montre la présence de deux zones sombre et claire,
- la figure 2 déjà décrite représente une vue en coupe du même pixel pour illustrer les orientations de ces zones,
- la figure 3 déjà décrite représente une solution proposée par l'art antérieur pour annihiler l'effet néfaste de ces zones,
- les figures 4a et 4b représentent des molécules de cristal liquide nématique twisté ayant respectivement en l'absence de champ électrique un alignement parallèle et antiparallèle qui sont utilisés dans la présente invention,
- la figure 5 représente un mode de réalisation préférentiel d'une cellule à laquelle s'applique la présente invention,
- et les figures 6a et 6b représentent les orientations obtenues en utilisant une structure de pixel selon deux modes de réalisation de l'invention.

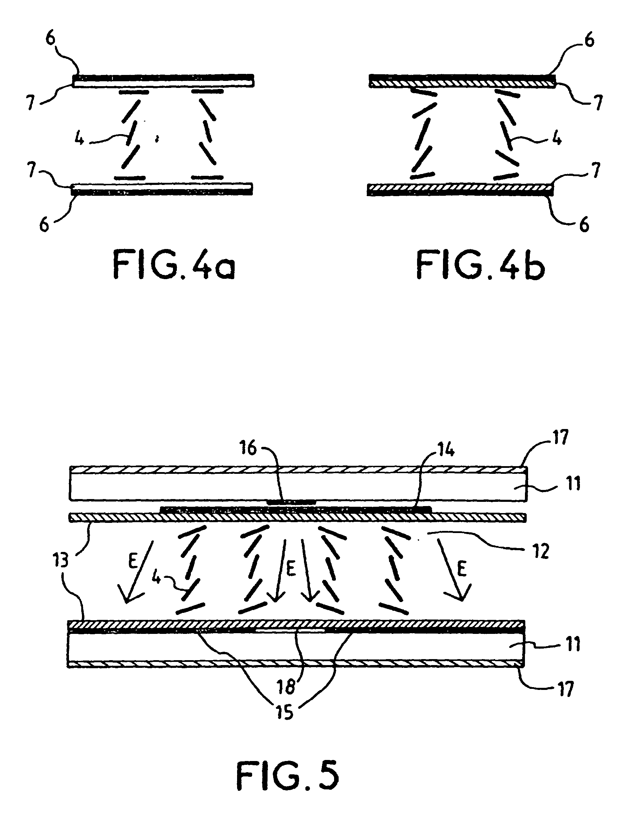

Une des caractéristiques de la présente invention est l'utilisation d'un alignement des molécules de cristal liquide sans pré-inclinaison effective en l'absence d'un champ électrique. Comme cela est illustré par la figure 4a, les couches d'alignement 7 peuvent être traitées de manière à obtenir des molécules de cristal liquide 4 dont l'alignement est dit parallèle, c'est à dire qu'elles ont une préinclinaison de 0°. Cela peut être obtenu par léger brossage ou impression du polyimide, ou bien par dépôt oblique d'oxyde de Silicium SiO. Alternativement, il est possible d'utiliser un alignement dit antiparallèle en utilisant une couche d'alignement créant une préinclinaison différente de zéro. Dans ce cas, les couches en haut et en bas de la cellule sont arrangées de façon à ce que les deux pré-inclinaisons soient opposées et s'annulent. Ce type d'alignement est appelé alignement anti-parallèle.

Sur la figure 5 est représentée la section d'un écran à cristaux liquides utilisable dans l'invention. Il est constitué de par deux plaques substrats transparents 11 sur les surfaces intérieures desquels sont déposées des électrodes transparentes 14 et une contre électrode transparente 15. Sur les faces intérieures de ces électrodes 14 et 15 sont déposées et traitées des couches d'alignement 13. Ces couches peuvent être, soit du type permettant un alignement parallèle, soit du type imposant une pré-inclinaison des molécules de cristal liquides 4 situées entre ces deux couches. Dans ce dernier cas, lesdites couches en haut et en bas de la cellule sont arrangées de façon anti-parallèle. Ledit cristal liquide peut être nématique twisté ou d'un tout autre type dont les effets électrooptiques sont modifiés par un champ électrique E. Par ailleurs, ces pixels sont encadrés par deux polariseurs 7.

La contre électrode 15 comporte une rainure 18 coupant le pixel en son milieu. De préférence cette rainure a une largeur de 0.5 à 2 fois l'épaisseur de la couche des molécules de cristal liquide 4, qui est typiquement entre 3 et 10 µm. Lorsqu'une différence de potentiel U est appliquée aux électrodes de pixel 14 et à la contre électrode 15, cette rainure crée une composante latérale au champ électrique E. Le champ électrique E est alors perpendiculaire aux électrodes dans les zones où celles-ci se font face, et oblique dans les zones aux bords des électrodes de pixel 14 et dans les zones comprises entre la rainure 18 et l'électrode 14, comme cela est indiqué sur la figure 5. Ainsi, deux domaines optiques ayant chacun des directions de tilt différentes sont créés par la distribution non homogène du champ électrique E due à la structure de pixel selon l'invention.

Afin d'éliminer les perturbations optiques dues à la frontière entre les deux domaines, il est nécessaire de masquer la partie autour de la rainure 18 par le dépôt d'un matériau opaque 16, par exemple sur la face extérieure de l'électrode 14. Ce matériau peut être du métal et peut être utilisé comme capacité de stockage, par exemple dans le cas d'un adressage de matrice active.

Dans le cas d'un écran adressé par une matrice active, la contre électrode recouvre en général tout l'écran. Dans ce cas, il est nécessaire de graver cette contre électrode afin de réaliser les rainures 18 dans une étape supplémentaire très simple. Le masque utilisé pour cette étape peut être le même que celui utilisé pour déposer le masque opaque 16.

Il est bien évident que cet adressage particulier n'est pas limitatif.

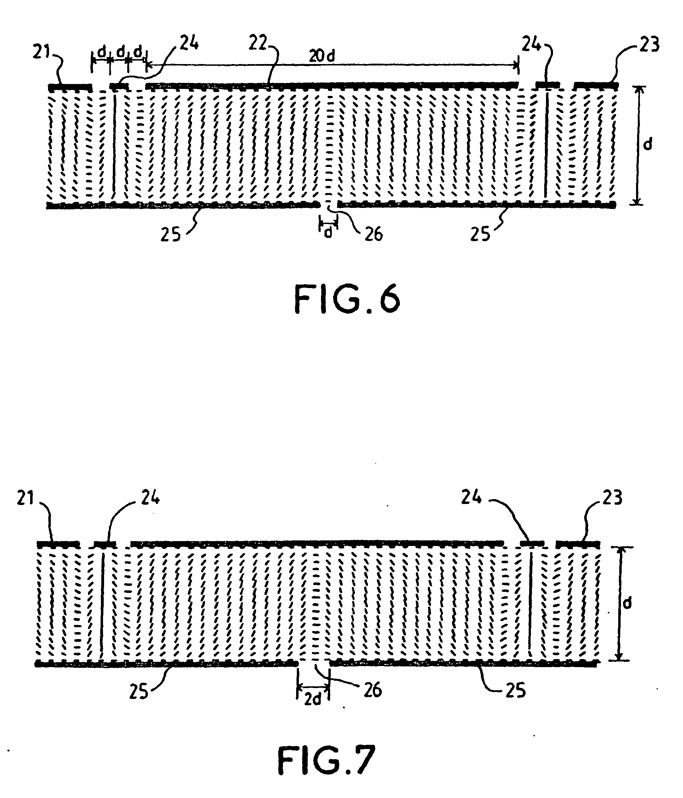

La figure 6 représente une vue en coupe d'un écran à cristaux liquides selon un premier mode de réalisation de l'invention. Il est formé d'électrodes 21, 22 et 23 séparées par des lignes de sélection (ou de données) 24, et d'une contre électrode 25 munie de rainures 26. Les molécules de cristal liquide 4 ont un alignement parallèle comme décrit sur la figure 4a.

La figure 7 représente quant à elle une structure d'écran identique à celle de la figure précédente mais avec une préinclinaison de 1°, les molécules de cristal liquide ont un alignement anti parallèle comme décrit sur la figure 4b.

Du fait du temps de formation relativement long des deux domaines, conformément à la présente invention, la polarisation n'est pas égale à zéro lorsque le pixel n'est pas adressé (état OFF), de manière à maintenir la structure des domaines. De préférence, la valeur de la tension de polarisation U est comprise entre 0,8 et 1,3 fois la valeur de la tension de seuil du cristal liquide en présence d'un champ homogène.

D'autre part, afin de préserver les propriétés optiques de l'écran, il est préférable de modifier légèrement l'épaisseur du volume de cristal liquide. En effet, cette épaisseur *d* est en général choisie de manière à ce que la biréfringence effective donne le maximum de transmission dans l'état OFF ainsi que de bonnes caractéristiques angulaires. C'est à dire qu'il faut que le produit *d*Δ*n*/λ = √*3*/*2* ait une certaine valeur, Δ*n* étant la biréfringence et λ la longueur d'onde de la lumière. Dans le cas d'une prépolarisation dans l'état OFF, les molécules de cristal liquide étant légèrement inclinées, la valeur effective de *d.*Δ*n* est légèrement diminuée. Ainsi, il est préférable d'augmenter l'épaisseur du cristal liquide afin de compenser cet effet. Une telle modification est préférable toutes les fois où cette valeur *d.*Δ*n* intervient.

La présente invention s'applique à tous les types d'écrans à cristaux liquides, à vision directe ou à projection, munis de circuits de commande intégrés ou non.

## Revendications

1. Ecran à cristaux liquides formé de cellules électrooptiques, chaque cellule étant formée de deux plaques substrats (11) comportant l'une, une électrode de pixel (14) et l'autre, une contre électrode (15) entre lesquels sont comprises des molécules de cristal liquide, dans laquelle la contre électrode est divisée en deux parties par une rainure (18), l'écran comportant des moyens pour appliquer une tension de polarisation entre les électrodes de chaque cellule modifiant les propriétés optiques du cristal liquide entre un état OFF et un état ON, **caractérisé en ce que** la tension de polarisation est différente de zéro lorsque la cellule est dans l'état OFF.

2. Ecran selon la revendication 1, **caractérisé en ce que** la tension de polarisation (U) est comprise entre 0,8 et 1,3 fois la valeur de la tension de seuil du cristal liquide en présence d'un champ électrique homogène.

3. Ecran selon l'une des revendications 1 ou 2, **caractérisé en ce que** le cristal liquide a une épaisseur (d) telle que le produit de la biréfringence (Δ*n*) et de cette épaisseur *(d)*, divisé par la longueur d'onde de la lumière (λ), soit légèrement supérieure à la constante √3 / 2.

4. Ecran selon la revendication 3, **caractérisé en ce que** l'épaisseur (d) du cristal liquide est telle que le produit de la biréfringence (Δ*n*) et de cette épaisseur ( *d*), divisé par la longueur d'onde de la lumière (A), soit compris entre 1,1 et 1,5 fois la constante √3 / 2.

5. Ecran selon l'une des revendications 1 à 4, **caractérisé en ce que** chacune des deux parties d'une cellule électrooptique est constituée de molécules ayant des inclinaisons opposées sous application d'un champ électrique entre ladite électrode de pixel et ladite contre-électrode.

6. Ecran selon la revendication 5, **caractérisé en ce que** les molécules de cristaux liquides ont un alignement parallèle en l'absence d'un champ électrique.

7. Ecran selon la revendication 5, **caractérisé en ce que** les molécules de cristaux liquides ont un alignement anti parallèle en l'absence d'un champ électrique.

8. Ecran selon la revendication 1, **caractérisé en ce qu'**un matériau opaque est déposé sur l'une des plaques substrats afin de masquer ladite rainure.

9. Ecran selon la revendication 8, **caractérisé en ce que** le matériau opaque utilisé est un métal utilisé comme capacité de stockage.

## Claims

1. A liquid crystal screen formed of electro-optic cell, each cell being formed by two substrate plates (11) comprising one a pixel electrode (14) and the other a counter electrode (15) with a liquid crystal molecules (11) comprised between them, in which the counter-electrode is divided, into two parts by a groove (18), said screen comprising means to apply a polarization voltage between the electrodes of each cell, modifying the optical properties of the liquid crystal between an OFF state and an ON state, **characterized in that** the polarization voltage is a non-zero polarization voltage when the cell is in an OFF state.

2. Screen according to claim 1, **characterized in that** the polarization voltage (U) is between 0.8 and 1.3 times the value of the threshold voltage of said liquid crystal in the presence of a uniform electric field.

3. Screen according to any of claims 1 or 2, **characterized in that** the liquid crystal has a thickness (d) such that the product of the birefringence (Δn) and this thickness (d), divided by the wavelength of the light (λ), is slightly greater than the constant √3/2.

4. Screen according to claim 3, **characterized in that** the thickness (d) of said liquid crystal is such that the product of the birefringence (Δn) and this thickness (d), divided by the wavelength of the light (λ), is between 1.1 and 1.5 times the constant √3/2.

5. Screen according to any of claims 1 to 4, **characterized in that** each part of said two parts of the counter-electrode of an electro-optical cell is constituted by molecules having an opposite inclination, under the influence of an electric field between the said pixel electrode and said counter-electrode.

6. Screen according to claim 5, **characterized in that** said liquid crystal molecules have a parallel alignment in the absence of an electric field.

7. Screen according to claim 5, **characterized in that** said liquid crystal molecules have an anti-parallel alignment in the absence of an electric field.

8. Screen according to claim 1, **characterized in that** an opaque material is deposited on one of the substrates in order to mask said groove.

9. Screen according to claim 8, **characterized in that** said opaque material is a metal forming a storage capacity.

## Patentansprüche

1. Durch elektrooptische Zellen gebildeter Flüssigkristallbildschirm, wobei jede Zelle durch zwei Substratplatten (11) gebildet ist, von denen die eine eine Pixelelektrode (14) aufweist und die andere eine Gegenelektrode (15) aufweist, zwischen denen Flüssigkristallmoleküle enthalten sind, in welcher Zelle die Gegenelektrode durch eine Nut (18) zweigeteilt ist, wobei der Bildschirm Mittel aufweist, um zwischen den Elektroden jeder Zelle eine Polarisierungsspannung anzulegen, wodurch die optischen Eigenschaften des Flüssigkristalls zwischen einem OFF-Zustand und einem ON-Zustand veränderbar sind, **dadurch gekennzeichnet, dass** die Polarisationsspannung ungleich Null ist, wenn die Zelle sich im OFF-Zustand befindet.

2. Bildschirm nach Anspruch 1, **dadurch gekennzeichnet, dass** die Polarisationsspannung (U) bei Vorliegen eines homogenen elektrischen Feldes zwischen dem 0,8fachen und dem 1,3fachen des Werts der Schwellenspannung des Flüssigkristalls liegt.

3. Bildschirm nach einem der Ansprüche 1 oder 2, **dadurch gekennzeichnet, dass** das Flüssigkristall eine derartige Dicke (d) aufweist, dass das Produkt der Doppelbrechung (Δn) und dieser Dicke (d), geteilt durch die Lichtwellenlänge (λ), die Konstante √3/2 leicht übersteigt.

4. Bildschirm nach Anspruch 3, **dadurch gekennzeichnet, dass** die Dicke (d) des Flüssigkristalls derart ist, dass das Produkt der Doppelbrechung (Δn) und dieser Dicke (d), geteilt durch die Lichtwellenlänge (λ), zwischen dem 1,1fachen und dem 1,5fachen der Konstante √3/2 liegt.

5. Bildschirm nach einem der Ansprüche 1 bis 4, **dadurch gekennzeichnet, dass** jedes der beiden Teile einer elektrooptischen Zelle durch Moleküle gebildet ist, die unter Anlage eines elektrischen Feldes zwischen der Pixelelektrode und der Gegenelektrode entgegengesetzte Neigungen aufweisen.

6. Bildschirm nach Anspruch 5, **dadurch gekennzeichnet, dass** die Flüssigkristallmoleküle bei Nichtvorliegen eines elektrischen Feldes eine parallele Ausrichtung aufweisen.

7. Bildschirm nach Anspruch 5, **dadurch gekennzeichnet, dass** die Flüssigkristallmoleküle bei Nichtvorliegen eines elektrischen Feldes eine antiparallele Ausrichtung aufweisen.

8. Bildschirm nach Anspruch 1, **dadurch gekennzeichnet, dass** ein undurchsichtiges Material auf eine der Substratplatten aufgelegt ist, um die Nut zu verdecken.

9. Bildschirm nach Anspruch 8, **dadurch gekennzeichnet, dass** es sich bei dem verwendeten undurchsichtigen Material um ein Metall handelt, das als Speicherkapazität benutzt wird.
